# EUROPÄISCHE PATENTANMELDUNG

(11) **EP 2 583 926 A1**
(43) Veröffentlichungstag der Anmeldung: **24.04.2013**
(21) Anmeldenummer: 13151384.8
(22) Anmeldetag: 08.12.2010
(51) Int. Cl.: B65H 29/12, B65H 29/58, B65G 47/64

(54) **Aussortiervorrichtung**

(30) Priorität: 10.12.2009 EP 09015332
(62) Teilanmeldung aus: 10790925.1
(71) Anmelder: Mettler-Toledo Garvens GmbH, 31180 Giesen (DE)
(72) Erfinder: Eiserloh, Katrin, 29378 Wittingen (DE); Müller, Stefan, 31096 Weenzen (DE)
(74) Vertreter: Mettler-Toledo

(57) **Zusammenfassung**

Eine Aussortiervorrichtung (1, 101), welche in einer Förderanlage mit einer Inspektionseinrichtung einsetzbar ist, weist eine Zuführeinrichtung (2) und eine Abführeinrichtung (3) zum zu- und weg führen der Produkte zu einer mit einem nach unten verschwenkbaren Aussortierelement (7) versehenen Aussortiereinrichtung (4) auf. Ferner ist eine Mitnahmeeinrichtung (5, 6) vorhanden, deren Breite einem Teil der Breite der Zuführeinrichtung bzw. Abführeinrichtung bzw. der Aussortiereinrichtung (4) entspricht. Seitlich der Mitnahmeeinrichtung angeordnet, und mit dieser beweglich verbunden, ist mindestens ein der Führung von oben eines zwischen dem Aussortierelement und der Mitnahmeeinrichtung förderbaren Produktes dienendes Führungselement (9) angeordnet. Dabei ist das mindestens eine Führungselement in vertikaler Richtung beabstandet von dem Aussortierelement und gegenüber der Mitnahmeeinrichtung verschwenkbar..

## Beschreibung

Die Erfindung betrifft eine Aussortiervorrichtung in einer Förderanlage, welche eine Aussortiereinrichtung sowie eine Zuführeinrichtung zum Zuführen der Produkte zur Aussortiereinrichtung und eine Abführeinrichtung zum Wegführen der Produkte von der Aussortiereinrichtung aufweist.

Aussortiervorrichtungen und Aussortierverfahren sind weithin bekannt. Sie dienen dem Aussortieren von Produkten, die nicht den für die Produkte gewünschten Eigenschaften entsprechen. Dabei ist die Bezeichnung "Produkt" hier als ein Sammelbegriff für Erzeugnisse aller Art zu verstehen, die insbesondere bereits verpackt sein können. Besonders in der pharmazeutischen Industrie und der Lebensmittelindustrie werden diese Aussortierverfahren bevorzugt eingesetzt, damit nach der Aussortiervorrichtung nur noch Produkte weitertransportiert werden, welche die vom Hersteller gewünschten Eigenschaften aufweisen.

Diejenigen Produkte, welche die erwünschten Eigenschaften nicht aufweisen, werden aus dem Förderweg abgelenkt und gelangen zu einer Sammelzone, wo sie beispielsweise in Auffangbehältnissen gesammelt werden können. Um festzustellen, welche Produkte aussortiert bzw. abgelenkt werden müssen, werden entsprechend den gewünschten Eigenschaften (negative) Sortierkriterien vorgegeben. Es kann sich dabei um ein fehlerhaftes Gewicht (zu gross oder zu klein), eine fehlerhafte Verpackung, eine Verunreinigung des Produkts und dergleichen mehr handeln. Die Produkte werden während des Transports längs des Förderweges nach mindestens einem dieser Sortierkriterien geprüft. Stellt sich dabei heraus, dass ein Produkt mindestens eines der Kriterien nicht erfüllt, wird es im Anschluss an diese Feststellung aus dem Förderweg abgelenkt und aussortiert.

In der Regel arbeiten Aussortiervorrichtungen in Verbindung mit Inspektionseinrichtungen, also Vorrichtungen zum Prüfen eines vorgegebenen Sortierkriteriums automatisch, das heisst die Prüfung nach den vorgegebenen Sortierkriterien wie auch die Ablenkung der auszusortierenden Produkte erfolgt automatisiert und wird üblicherweise von einer elektronischen Steuereinheit gesteuert. Im Stand der Technik sind verschiedene Aussortiervorrichtungen bekannt. So beschreibt beispielsweise die EP 1 798 180 A2 ein Verfahren und eine Vorrichtung zum Sortieren von Produkten, wobei diese nach mindestens zwei vorgegebenen Sortierkriterien geprüft und bei Erfüllung eines der Kriterien automatisch quer zur Förderrichtung aus dem Förderweg zu einem Aufnahmebereich hin abgelenkt werden, wobei die Ablenkkraft unabhängig davon aufgrund welches erfüllten Kriteriums das jeweilige Produkt abzulenken ist, von einem gemeinsamen Zentrum ausgeht. Auszusortierende Produkte werden dabei mittels eines quer zur Förderrichtung wirkenden Ausschiebers einem Auffangbehältnis zugeführt.

In der EP 0 540 148 wird eine Vorrichtung und ein Verfahren zum Testen der Dichtheit sowie zum automatisierten Verwiegen von dicht verschlossenen Beuteln beschrieben. Mittels einer seitlich an einer Förderstrecke angeordneten druckluftbeaufschlagten Aussortiereinrichtung werden Beutel, deren Dichtheit nicht gegeben ist, durch einen Luftstrom in ein Auffangbehältnis geblasen.

Die EP 1 411 337 A1 befasst sich ebenfalls mit dem Testen der Dichtheit von verschlossenen Beuteln. Produkte, die das vorgegebene Kriterium nicht erfüllen, werden mittels eines im Aussortierfall nach unten klappbaren Förderbandes in ein Auffangbehältnis transportiert.

Bei der Aussortierung von Produkten mit den vorab beschriebenen herkömmlichen Methoden, wie dem Beaufschlagen eines auszusortierenden Produkts mit Druckluft, um dieses in eine gewünschte Richtung zu lenken, oder beim Ausschieben aus dem Förderstrom mittels eines Ausschiebers, entsteht insbesondere bei flachen und/oder leichten Produkten, wie zum Beispiel Siegelrandbeuteln, das Problem, dass das Produkt entweder nicht vom Luftstrom erfasst wird oder aufgrund seines geringen Gewichts an eine unerwünschte Stelle geblasen wird. Bei der Verwendung von Ausschiebern liegt das Problem darin, dass vor allem flache Produkte sich mit dem Ausschieber verkeilen können und damit schlimmstenfalls ein Anhalten der Anlage verursachen können. Um also sorgfältig und zuverlässig aussortieren zu können, ist die Aussortiergeschwindigkeit bei diesen Vorrichtungen begrenzt.

Soll mittels eines nach unten verschwenkbaren Aussortierförderbandes aussortiert werden oder mittels einer nach unten verschwenkbaren Aussortierklappe, wobei die aussortierten Produkte entlang dem Aussortierförderband oder der Aussortierklappe transportiert werden, um in ein Auffangbehältnis zu fallen, so ist die Aussortiergeschwindigkeit durch die Forderung begrenzt, dass ein Transport des auszusortierenden Produkts von der Zuführeinrichtung, beispielsweise einem Zuführband, direkt auf die Abführeinrichtung, beispielsweise einem Abführband, vermieden werden muss. Das heisst für eine Reduktion der Fehlerrate beim Aussortieren muss das Produkt lange genug auf dem nach unten verschwenkbaren Aussortierförderband oder der Aussortierklappe verbleiben, so dass es sicher entlang jenem/jener in das Auffangbehältnis transportiert werden kann.

Aufgabe der Erfindung ist es daher, eine schnelle und zuverlässige Aussortiervorrichtung zur Verfügung zu stellen, die die Nachteile des Standes der Technik beseitigt.

Erfindungsgemäss ist die Aufgabe mit einer Aussortiereinrichtung, einer Aussortiervorrichtung in einer Förderanlage und einer Förderanlage gelöst, welche die Merkmale des unabhängigen Anspruchs aufweist.

Die Aussortiervorrichtung weist eine Aussortiereinrichtung mit einem in Betriebslage nach unten kippbaren Aussortierelement sowie eine Zuführeinrichtung zum Zuführen der Produkte zur Aussortiereinrichtung und eine Abführeinrichtung zum Wegführen der Produkte von der Aussortiereinrichtung auf. Ferner ist eine Mitnahmeeinrichtung vorhanden, deren Breite einem Teil der Breite der Aussortiereinrichtung entspricht. Seitlich der Mitnahmeeinrichtung ist ein, der Führung von oben eines zwischen dem Aussortierelement und der Mitnahmeeinrichtung förderbaren Produktes dienendes Führungselement angeordnet. Das mindestens eine Führungselement ist von dem Aussortierelement in vertikaler Richtung beabstandet mit diesem verbunden und relativ zur Mitnahmeeinrichtung verschwenkbar.

Als Breite sei hier die horizontale Ausdehnung orthogonal zur Transportrichtung der Förderanlage verstanden.

Vermittels der erfindungsgemässen Vorrichtung ist eine stetige Produktführung sichergestellt. Die Mitnahmeeinrichtung gewährleistet dabei im Falle, dass das Kriterium hinsichtlich einer gewünschten Eigenschaft erfüllt ist, eine sichere Förderung des Produkts über das Aussortierelement hinweg zur Abführeinrichtung und im Falle, dass das Kriterium nicht erfüllt ist, einen sicheren Transport auf das sich nach unten verschwenkte Aussortierelement. In letzterem Falle ist im Zusammenwirken der Mitnahmeeinrichtung mit dem mindestens einen sich oberhalb des Produkts befindlichen Führungselement eine sichere Ablenkung des auszusortierenden Produkts entlang dem Aussortierelement in ein entsprechendes Auffangbehältnis gewährleistet. In der Folge lässt sich problemlos die Aussortiergeschwindigkeit erhöhen, ohne dass die Zuverlässigkeit im Aussortierfall leidet, wodurch Im Vergleich zum bekannten Stand der Technik ein erheblich höherer Produktdurchsatz erzielt werden kann. Limitierendes Element für den Durchsatz an Produkten in der Fördereinrichtung ist nun nicht mehr die potenzielle Aussortier-Fehlerrate, da ein als fehlerhaft erkanntes Produkt stets sicher aus dem Produktstrom geführt wird.

Die erfindungsgemässe Aussortiervorrichtung ist besonders gut für das Aussortieren von flachen Objekten, beispielsweise von Flachrandbeuteln, auch Siegelrandbeutel genannt, geeignet. In solchen Beuteln sind im Lebensmittelbereich beispielsweise Suppen oder Gewürze verpackt; in der pharmazeutischen Industrie findet man Siegelrandbeutel, die zum Beispiel Medikamente in Pulverform enthalten. Selbst bei ungleichmässig verteiltem Inhalt des Produkts in den Beuteln ist jederzeit eine Mitnahme und gegebenenfalls eine Aussortierung gewährleistet.

Selbstredend können auch andere weniger flach ausgeformte verpackte oder unverpackte Produkte ebenfalls mit der erfindungsgemässen Aussortiervorrichtung gehandhabt werden. Die Funktionalität einer Aussortiervorrichtung kann an unterschiedliche Produktformate angepasst werden. Ebenso ist eine Anpassung an den Einsatz in Mehrspurförderanlagen in Verbindung mit Mehrspur-Inspektionseinrichtungen möglich.

Die Aussortiervorrichtung kann durch die kompakte, mobile Bauform in jede denkbare Prozesslinie, an unterschiedlichen Positionen, integriert werden. Sie lässt sich an unterschiedliche Förderbreiten und Höhen anpassen und kann auch als ein wassergeschütztes System eingesetzt werden.

Die Zuführeinrichtung ist bevorzugt ein Zuführband und die Abführeinrichtung ein Abführband, welche insbesondere jeweils als ein Endlosförderband ausgestaltet sind.

In besonders vorteilhafter Ausführung umfasst die Mitnahmeeinrichtung eine in vertikaler Richtung verstellbare Bandaufnahme mit einem Oberläufer-Fördergurt, der eine Oberfläche mit einem hohen Reibungskoeffizienten aufweist. Insbesondere ist der Oberläufer-Fördergurt als ein Flachband aus Kunststoff, insbesondere aus geschäumtem Kunststoff, ausgestaltet.

Der Oberläufer-Fördergurt kann sich in Transportrichtung mindestens von der Zuführeinrichtung bis zur Abführeinrichtung hin erstrecken. Dessen Umfangsgeschwindigkeit ist vorzugsweise den Umfangsgeschwindigkeiten des Zuführbandes und des Abführbandes angepasst.

Es wird damit eine stetige Produktführung sichergestellt, bei der die Produkte auf der gewünschten Fördergeschwindigkeit gehalten werden und dabei ihre Lage zueinander nicht verändern können. Gleichzeitig ist eine schonende Behandlung der Produkte gewährleistet.

Besonders bevorzugte Ausführungsformen der Aussortiervorrichtung umfassen entweder ein pneumatisch oder ein motorisch angesteuertes, nach unten verschwenkbares Aussortierelement in Form einer Aussortierklappe, welche einen in Transportrichtung sich verjüngenden Längsquerschnitt aufweisen kann. Alternativ kann das Aussortierelement jedoch auch ein entsprechend verschwenkbares Endlosförderband umfassen.

Mit Vorteil kann das Aussortierelement eine aus einem Kunststoff mit niederem Reibungskoeffizienten bestehende Oberfläche aufweisen, insbesondere kann ein als Aussortierklappe gestaltetes Aussortierelement gesamthaft aus einem solchen Kunststoff gefertigt sein.

Eine vorteilhafte Weiterbildung sieht vor, dass das Führungselement eine Führungsklappe aufweist, wobei bevorzugt zwei beidseitig der Mitnahmeeinrichtung angeordnete Führungsklappen vorhanden sind. Dabei kann die mindestens eine mit dem Aussortierelement nach unten verschwenkbare Führungsklappe einen in Transportrichtung sich verjüngenden Längsquerschnitt aufweisen, wie dies beispielsweise von Flipperklappen bekannt ist.

Die Führungsklappen dienen im Fall, dass ein fehlerhaftes Produkt auszusortieren ist, der Ablenkung der Produkte nach unten in ein Auffangbehältnis, das heisst sie lenken von oben her das auszusortierende Produkt in die richtige Richtung. Führungsklappe und Aussortierelement praktizieren beim Verschwenken stets denselben Bewegungsablauf.

Die Verbindung zwischen dem Aussortierelement und der mindestens einen Führungsklappe kann mittels einer Strebe als feste Verbindung bestehen, wobei bevorzugt der vertikale Abstand zwischen Aussortierelement und Führungsklappe einstellbar ist. In einem solchen Fall ändert sich der Einstellwinkel zwischen Aussortierelement und Führungsklappe nicht, wenn beide zusammen zum Aussortieren eines Produkts nach unten verschwenkt werden, da Aussortierelement und Führungsklappe im Wesentlichen parallel zueinander ausgerichtet sind.

In einer alternativen Ausgestaltung können das Aussortierelement und die mindestens eine Führungsklappe gelenkig miteinander verbunden sein, wobei insbesondere der vertikale Abstand zwischen Aussortierelement und Führungsklappe einstellbar ist. In diesem Fall kann sich der Einstellwinkel zwischen dem Aussortierelement und der Führungsklappe in Abhängigkeit der räumlichen Anordnung deren Strebenlagerstellen und Gelenkstellen zueinander ändern, wenn beide zusammen zum Aussortieren eines Produkts nach unten verschwenkt werden.

Für eine schnelle und verkantungsfreie Führung eines auszustossenden Produkts zwischen Aussortierelement und Führungsklappe hindurch, im nach unten verschwenkten Zustand des Aussortierelements, ist der vertikale Abstand zwischen Aussortierelement und Führungsklappe sich über die Länge der Führungsklappe betrachtet in Transportrichtung aufweitend ausgestaltet.

Eine erfindungsgemässe Aussortiervorrichtung ist in einer Förderanlage realisiert, die mit einer der Verifizierung vorgegebener Aussortierkriterien für ein Produkt dienenden Inspektionseinrichtung versehen ist. Letztere kann insbesondere als dynamische Waage, als Einrichtung zur Bestimmung der Dimensionen des Produkts, als Einrichtung zur Bestimmung der Dichtheit der Produktverpackung und/oder als Einrichtung zur Inspektion hinsichtlich Fremdkörpern im Produkt ausgebildet sein. Es ist eine Steuereinrichtung vorhanden, mittels welcher bei Erfüllung der vorgegebenen Aussortierkriterien die Aussortiereinrichtung betätigbar ist.

Zur Vermeidung der Übertragung von durch die Aussortiervorrichtung erzeugten Vibrationen an die Inspektionseinrichtung, ist es von Vorteil, wenn die Aussortiervorrichtung auf einem vom Gestell der Inspektionseinrichtung separaten Gestell angeordnet ist.

Eine Aussortiereinrichtung in einer Förderanlage umfasst ein in Betriebslage nach unten kippbares Aussortierelement und mindestens ein von dem Aussortierelement in vertikaler Richtung beabstandet angeordnetes und von oben die Transportrichtung eines auf dem Aussortierelement förderbaren Produktes lenkendes Führungselement. Das mindestens eine Führungselement ist mit dem Aussortierelement verbunden und mit diesem verschwenkbar ausgestaltet.

Vermittels des mindestens einen Führungselements, das von oben die Transportrichtung lenkt, können die fehlerhaften Produkte durch das Aussortierelement herunter in einen Auffangbehälter rutschen und/oder transportiert werden. Dies kann auch bei extrem schneller Bewegung der zu fördernden Produkte über die Aussortiereinrichtung fehlerfrei erfolgen, wodurch ein erhöhter Produktdurchsatz in einer mit der Aussortiereinrichtung versehenen Förderanlage erzielt werden kann.

Die Breite des mindestens einen Führungselements entspricht vorzugsweise einem Teil der Breite des Aussortierelements. Ferner ist eine Höhenverstelleinrichtung vorhanden und das mindestens eine Führungselement ist mit der Höhenverstelleinrichtung verbunden.

In einer vorteilhaften Ausgestaltung weist das nach unten verschwenkbare Aussortierelement eine Aussortierklappe auf und wird insbesondere motorisch oder pneumatisch angesteuert. Diese Aussortierklappe kann insbesondere einen in Transportrichtung sich verjüngenden Längsquerschnitt aufweisen.

In einer weiteren bevorzugten Ausgestaltung weist das Aussortierelement eine aus einem Kunststoff mit niederem Reibungskoeffizienten bestehende Oberfläche auf, insbesondere kann ein als Aussortierklappe gestaltetes Aussortierelement gesamthaft aus einem solchen Kunststoff gefertigt sein.

Das Führungselement weist mit Vorteil mindestens eine Führungsklappe auf, wobei bevorzugt zwei symmetrisch angeordnete Führungsklappen vorhanden sind. Dabei können das Aussortierelement und die mindestens eine Führungsklappe mittels einer Strebe fest miteinander verbunden sein, wobei insbesondere der vertikale Abstand zwischen Aussortierelement und Führungsklappe einstellbar ist. Alternativ können das Aussortierelement und die mindestens eine Führungsklappe gelenkig miteinander verbunden sein, wobei insbesondere auch hier der vertikale Abstand zwischen Aussortierelement und Führungsklappe einstellbar ist. Dazu ist die mindestens eine Führungsklappe oberhalb der Aussortiereinrichtung an einer mit der Höhenverstelleinrichtung verbundenen Halteeinrichtung an Ihrem entgegen der Transportrichtung weisenden Ende angelenkt.

Die mindestens eine Führungsklappe dient im Fall, dass ein fehlerhaftes Produkt auszusortieren ist, der Ablenkung der Produkte nach unten in ein Auffangbehältnis, das heisst sie lenkt von oben her das auszusortierende Produkt in die richtige Richtung. Führungsklappe und Aussortierelement praktizieren beim Verschwenken denselben Bewegungsablauf.

Weitere Merkmale, Einzelheiten und Vorteile der Erfindung ergeben sich aus der folgenden Beschreibung und den schematisierten Zeichnungen. Es zeigen:
- Fig. 1: die Aussortiervorrichtung in einer perspektivischen Ansicht mit dem Aussortierelement in geschlossenem Zustand, der ein Weitertransportieren eines Produkts von einem Zuführband auf ein Abführband ermöglicht,
- Fig. 2: die Aussortiervorrichtung in einer perspektivischen Ansicht mit dem Aussortierelement in geöffnetem, das heisst nach unten verschwenktem Zustand zum Ableiten eines auszusortierenden Produkts aus dem Produktstrom,
- Fig. 3: die Aussortiervorrichtung in einer Ansicht von der Seite senkrecht zur Transportrichtung,
- Fig. 4: die Aussortiervorrichtung in einem Seitenriss in Transportrichtung in der Ausführungsform der Aussortiereinrichtung gemäss den Figuren 1 bis 3,
- Fig. 5: die Aussortiervorrichtung in einer perspektivischen Ansicht mit einer alternativen Ausführungsform der Aussortiereinrichtung.
- Fig. 6: eine alternative Form der Aussortiervorrichtung mit einer Aussortiereinrichtung in einer Ansicht von der Seite senkrecht zur Transportrichtung.

In den Figuren ist eine Aussortiervorrichtung 1, 101 zur Aussortierung fehlerhafter Produkte aus einem Produktstrom gezeigt. Bei den Produkten kann es sich in bevorzugter Weise um flache Siegelrandbeutel, wie beispielsweise solche mit Suppenpulver oder mit einem Gewürz befüllte Beutel handeln. Jedoch ist die Aussortiervorrichtung 1, 101 auch zur Aussortierung anderer fehlerhafter Produkte aus einem Produktstrom geeignet. Der Aussortiervorrichtung 1, 101 vorgeschaltet ist in der Regel eine hier nicht gezeigte Inspektionseinrichtung, welche eine gewünschte Eigenschaft des Produkts ermittelt und im Falle einer festgestellten Abweichung von einem vorgegebenen Aussortierkriterium, in die Aktivierung der Aussortiervorrichtung 1, 101 mittels einer Steuereinheit eingreift. Bei der Inspektionseinrichtung kann es sich um eine dynamische Waage zur Feststellung des Gewichts des Produkts, oder um eine Einrichtung zum Vermessen der Dimensionen des Produkts, oder um eine Einrichtung zum Testen der Dichtheit der Produktverpackung oder auch um eine Einrichtung zum Feststellen von Verunreinigungen im Produkt selbst handeln. Auch die Kombination mehrerer solcher Inspektionseinrichtungen soll hier nicht ausgeschlossen werden. Die Inspektionseinrichtung ist nicht Gegenstand der Erfindung und daher soll hier nicht weiter auf eine solche eingegangen werden.

Der Aussortiervorrichtung 1, 101 nachgeschaltet ist vorwiegend ein weiteres Transportband, das die nicht aussortierten Produkte weiteren Prozessabläufen zuführt.

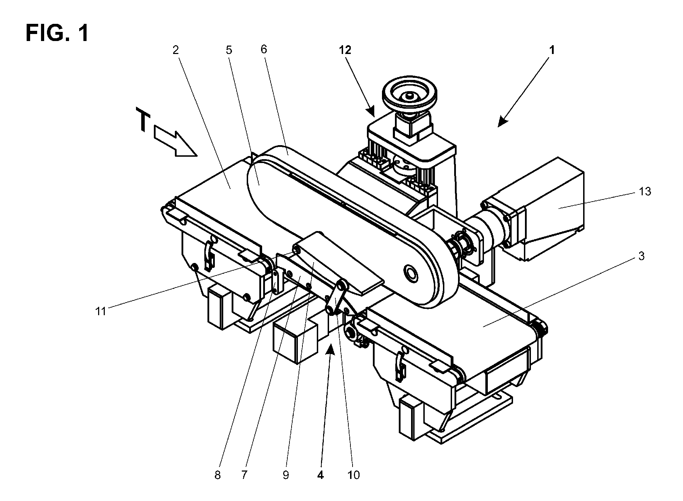

Die in der Figur 1 gezeigte Aussortiervorrichtung 1 weist eine zwischen einem Zuführband 2 und einem Abführband 3 angeordnete Aussortiereinrichtung 4 auf. Das Zuführband 2 dient der Produktaufnahme durch die eigentliche Aussortiereinrichtung 4 und ist dieser vorangestellt. Die Aussortiereinrichtung 4 weist einen mit einer Mitnahmeeinrichtung zusammenwirkenden Klappmechanismus auf. Die Transportrichtung ist durch einen Pfeil T gekennzeichnet.

Die Mitnahmeeinrichtung ist in der gezeigten Ausführungsform als Bandaufnahme 5 mit einem Oberläufer-Fördergurt 6 ausgestaltet. Dieser Oberläufer-Fördergurt 6 ist in der gezeigten Ausführungsform als Endlosförderband aus weichem, nachgiebigem, in bevorzugter Ausführung geschäumtem, Kunststoff gefertigt und weist eine griffige Oberfläche auf zur Mitnahme der Produkte auf. Das von der Firma Ammeraal Beltech GmbH unter dem Namen PUS220 blau + PLS 035 rot erhältliche Produkt kann beispielsweise für den Oberläufer-Fördergurt 6 Verwendung finden. Der Oberläufer-Fördergurt 6 wird von einem Motor 13 angetrieben, so dass sich der Oberläufer-Fördergurt 6 auf der Unterseite der Bandaufnahme 5 in Transportrichtung und auf deren Oberseite entgegen der Transportrichtung bewegt. Die Bandaufnahme 5 ist über die Höhenverstelleinrichtung 12 in ihrer Höhe verstellbar entsprechend dem vom Oberläufer-Fördergurt 6 mitzunehmenden Produkt. Wie aus der Figur 1 zu erkennen ist, besitzt die mit dem Oberläufer-Fördergurt 6 ausgestattete Bandaufnahme 5 eine geringere Breite als das Zuführband 2, das Abführband 3 und/oder die dazwischen angeordnete Aussortiereinrichtung 4.

Die Aussortiereinrichtung 4 weist ein Aussortierelement in Form einer Aussortierklappe 7 auf, welche nahe dem in Transportrichtung weisenden Ende des Zuführbandes 2 über eine Gelenkverbindung 8 befestigt ist. Das in Transportrichtung weisende Ende der Aussortierklappe 7 kann im Aussortierfall nach unten verschwenkt werden. Alternativ zu einer Aussortierklappe 7 kann das Aussortierelement ein für den Aussortierfall nach unten verschwenkbares Endlosförderband aufweisen.

Nahe dem in Transportrichtung weisenden Ende der Aussortierklappe 7 ist in einem Abstand zu dieser eine Führungsklappe 9 mit der Aussortierklappe 7 verbunden. Diese Verbindung kann entweder über eine an ihren beiden Enden fest mit der Aussortierklappe 7 und der Führungsklappe 9 verbundenen Strebe 10 bewerkstelligt sein oder über eine gelenkige Verbindung an beiden Enden der Strebe 10. Die Führungsklappe 9 und eine weitere, in der Figur 1 nicht sichtbare Führungsklappe 9, die sich in der Figur 1 hinter der Bandaufnahme 5 befindet, sind seitlich der Bandaufnahme 5, zusammen mit dieser die gesamte Breite der Aussortierklappe 7 einnehmend angeordnet. Beide Führungsklappen 9 sind an ihrem der Transportrichtung abgewandten Ende seitlich an der Bandaufnahme 5 über ein Gelenk 11 angelenkt. Der Abstand der Führungsklappen 9 von der Bandaufnahme 5 ist gering und beträgt nur wenige Millimeter.

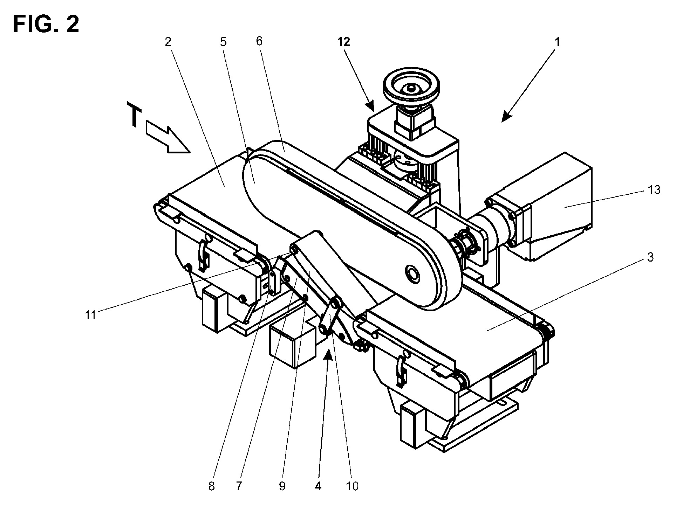

Aufgrund der Verbindung zwischen Führungsklappen 9 und Aussortierklappe 7 über die Streben 10, werden die Führungsklappen 9 im Aussortierfall zusammen mit der Aussortierklappe 7 in Abwärtsrichtung verschwenkt, wie dies in der Figur 2 gezeigt ist. Das auszusortierende Produkt befindet sich dabei auf der Aussortierklappe 7 liegend unterhalb der Führungsklappen 9 und rutscht entlang diesen in ein unterhalb der Aussortiereinrichtung 4 angeordnetes Behältnis (hier nicht gezeigt). Die Aussortierklappe 7 und die Führungsklappen 9 sind bevorzugt aus Kunststoff, z.B. Polyethylenterephthalat, und besitzen eine Oberfläche mit einem geringen Reibungskoeffizienten, was durch das Hinzufügen eines Festschmierstoffs bewirkt wird. Grundsätzlich könnten diese Elemente der Aussortiereinrichtung 4 auch aus Metall gefertigt sein und mit einer Kunststoffoberfläche versehen sein.

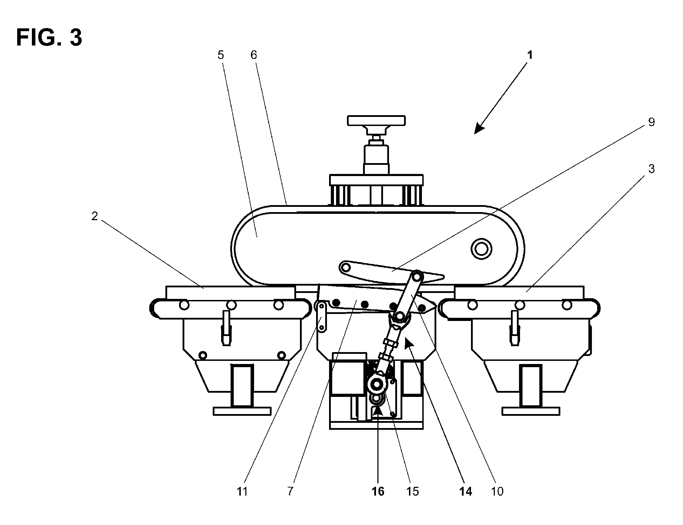

Unterhalb der Aussortierklappe 7 ist, mit dieser verbunden, ein Verschwenkmechanismus zu deren Öffnen und Schliessen angeordnet. Wie die Figur 3 in einer Seitenansicht der Aussortiervorrichtung 1 zeigt, kann es sich dabei um ein Gestänge 14 mit Gelenkköpfen 15 und einer Excenterverbindung 16 handeln, welche von einem Elektromotor angetrieben wird. Alternativ könnte der Verschwenkmechanismus auch direkt mittels eines Pneumatikzylinders bewegt werden. Grundsätzlich ist jeder dem Fachmann bekannte Verschwenkmechanismus hier verwendbar, solange er sich schnell genug betätigen lässt, um mit dem geforderten Produktdurchsatz übereinzustimmen. Es sei an dieser Stelle erwähnt, dass ein Produktdurchsatz von 300 Stück pro Minute oder auch mehr problemlos erreicht werden kann.

Im Folgenden wird die Funktionsweise der Aussortiervorrichtung 1, 101 erläutert: Ein von einer Inspektionseinrichtung kommender Produktstrom besteht aus vereinzelten Produkten, die auf dem Zuführband 2 der Aussortiereinrichtung 4 zugeführt werden und vom über die Bandaufnahme 5 bewegten Oberläufer-Fördergurt 6 ergriffen werden. Aufgrund der griffigen Oberfläche des Oberläufer-Fördergurts 6 werden die Produkte auf die Aussortierklappe 7 zu- und über diese hinweg bewegt. Gleichzeitig bewirkt - neben der Verbesserung der Griffigkeit - die Nachgiebigkeit des Oberläufer-Fördergurt-Materials auch eine Schonung der Produkte.

Während der Bewegung eines Produkts über die Aussortierklappe 7 hinweg, wird dieses, zumindest teilweise unter den seitlich der Bandaufnahme 5 befindlichen Führungsklappen 9 hindurchbewegt, wobei es diese nicht berührt. Handelt es sich nun um ein auszusortierendes Produkt, so wird die Aussortierklappe 7 zusammen mit den Führungsklappen 9 um die jeweiligen Gelenke 8, 11 nach unten verschwenkt, so dass das aussortierte Produkt unter Einwirkung der Schwerkraft nach unten in ein Auffangbehältnis rutschen kann. Dabei befinden sich die beiden in Transportrichtung weisenden Enden sowohl der Aussortierklappe 7 als auch der Führungsklappen 9 unterhalb der Oberseite des Abführbandes 3. Zur weiteren Sicherstellung der Aussortierung, d. h. dass ein auszusortierendes Produkt nicht vom Oberläufer-Fördergurt 6 versehentlich bis auf das Abführband 3 weiter transportiert wird, ist die Oberseite der Aussortierklappe 7 ihrem in Transportrichtung weisenden Ende zu nach unten geneigt, das heisst sie weist einen sich in Transportrichtung verjüngenden Längsquerschnitt auf.

Auf ähnliche Weise sind auch die Führungsklappen 9 ausgebildet, auch sie weisen einen sich in Transportrichtung verjüngenden Längsquerschnitt auf, wobei deren Unterseite am in Transportrichtung weisenden Ende nach oben geneigt ist. Diese Ausgestaltung der die auszusortierenden Produkte in ein Auffangbehältnis führenden Elemente erleichtert zudem den Ausstoss des Produkts und vermeidet ein Verkanten des Produkts während des Ausstosses.

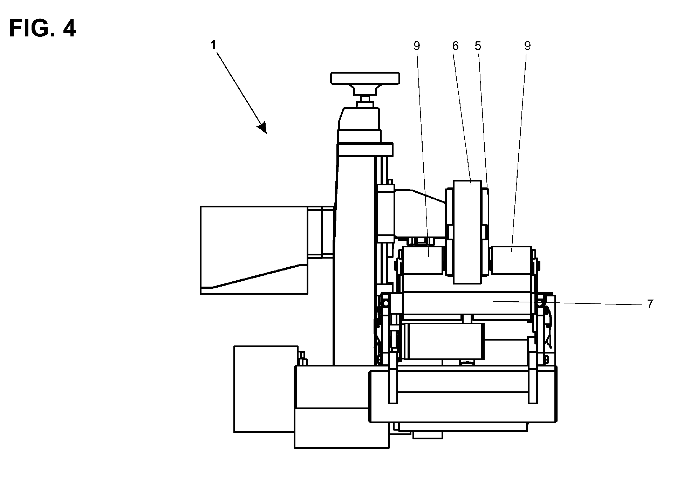

In der Figur 4, die einem Seitenriss der Aussortiervorrichtung 1 in Transportrichtung in der Ausführungsform der Aussortiereinrichtung gemäss den Figuren 1 bis 3 zeigt, ist zu erkennen, dass links und rechts der Bandaufnahme 5 mit dem Oberläufer-Fördergurt 6 jeweils eine Führungsklappe 9 angeordnet ist.

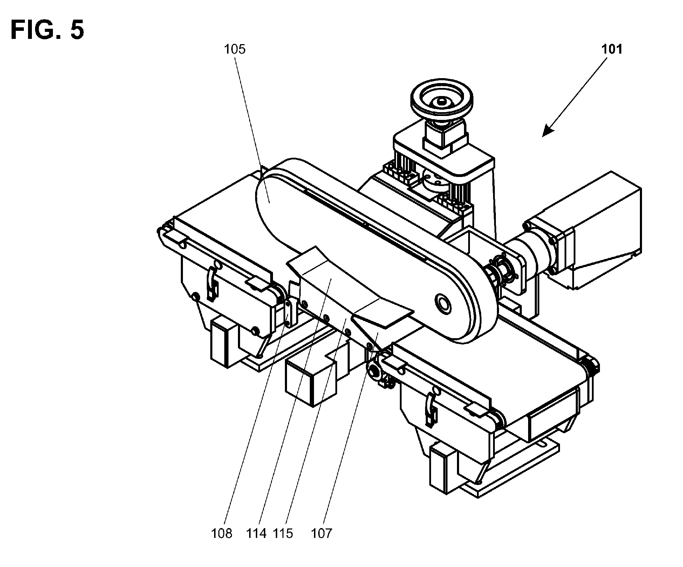

Figur 5 zeigt die Assortiervorrichtung 101 in einer perspektivischen Ansicht mit einer alternativen Ausführungsform der Aussortiereinrichtung. Anstelle zweier Führungsklappen ist ein über eine Seitenabstützung 115 fest mit der Aussortierklappe 107 verbundenes und zusammen mit dieser mittels der Gelenkverbindung 108 verschwenkbares oberes Führungsteil 114 beidseitig der Bandaufnahme 105 vorhanden. Aussortierklappe 105, Seitenabstützungen 115 und die oberen Führungsteile 114 bilden im Profil orthogonal zur Transportrichtung eine liegende, an ihrer Oberseite von beiden Seiten her eingeschlossene C-Form. In die verbleibende Öffnung dieser Oberseite ragt die Bandaufnahme 105. Der Vorteil dieser Ausführungsform besteht in ihrer einfachen Ausgestaltung. Aufgrund der Rundumabdeckung des Aussortierelements ist auch eine Verringerung der Verschmutzung des Aussortierelements zu erwarten.

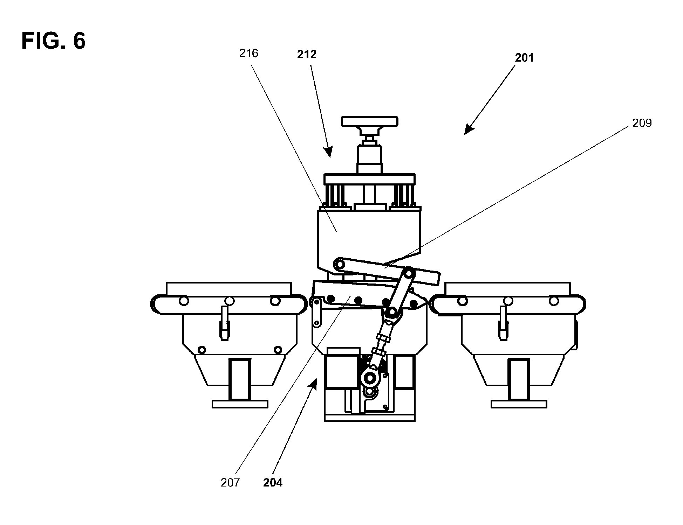

In der Figur 6 ist eine weitere Ausführungsform der Aussortiervorrichtung 201 in der Ansicht von der Seite zu sehen. Bei dieser Ausführungsform kann auf eine Mitnahmeeinrichtung, wie sie in den Figuren 1 bis 5 zu sehen ist, je nach zu förderndem Produkt und Fördergeschwindigkeit, verzichtet werden. Die Aussortiereinrichtung 204 weist, wie auch jene, die in den Figuren 1 bis 5 gezeigt sind, eine nach unten kippbare Aussortierklappe 207 auf und mindestens eine von der Aussortierklappe 207 in vertikaler Richtung beabstandet angeordnete und mit jener verschwenkbare Führungsklappe 209. Letztere ist in der gezeigten Ausführungsform über ihre Länge in etwa gleichbleibender Dicke ausgeformt. Zur Lagerung der mindestens einen Führungsklappe 209 - insbesondere wenn deren zwei vorhanden sind - ist eine mit der Höhenverstelleinrichtung 212 verbundene Halteeinrichtung 216 vorhanden, die bevorzugt in den Bereich oberhalb der Aussortiereinrichtung 204 hineinragt. Die mindestens eine Führungsklappe 209 ist dabei an ihrem entgegen der Transportrichtung gelegenen Ende an der Halteeinrichtung 216 angelenkt.

Selbstredend kann eine Aussortiereinrichtung 201, wie sie die Figur 6 zeigt, auch mit einem Führungselement gemäss der Figur 5 versehen sein. Ebenso kann es sich beim Aussortierelement auch um ein eingangs erwähntes nach unten verschwenkbares Aussortierförderband handeln.

Die erfindungsgemässe Aussortiereinrichtung und Aussortiervorrichtung wurden in bevorzugten Ausgestaltungen beschrieben und dargestellt. Anhand der erfindungsgemässen Lehre sind jedoch weitere fachmännische Ausgestaltungen realisierbar.

### Bezugszeichenliste

- 1, 101, 201: Aussortiervorrichtung
- 2: Zuführband
- 3: Abführband
- 4, 204: Aussortiereinrichtung
- 5, 105: Bandaufnahme
- 6: Oberläufer-Fördergurt
- 7, 107, 207: Aussortierklappe
- 8, 108: Gelenkverbindung
- 9, 209: Führungsklappe
- 10: Strebe
- 11: Gelenk
- 12, 212: Höhenverstelleinrichtung
- 13: Motor
- 14,114: Oberes Führungsteil
- 115: Seitenabstützung
- 216: Halteeinrichtung

## Patentansprüche

1. Aussortiervorrichtung (1, 101) in einer Förderanlage, welche eine Aussortiereinrichtung (4) mit einem in Betriebslage nach unten kippbaren Aussortierelement sowie eine Zuführeinrichtung zum zuführen der Produkte zur Aussortiereinrichtung (4) und eine Abführeinrichtung zum wegführen der Produkte von der Aussortiereinrichtung (4) aufweist, **dadurch gekennzeichnet, dass** eine Mitnahmeeinrichtung, deren Breite einem Teil der Breite der Aussortiereinrichtung (4) entspricht und mindestens ein seitlich der Mitnahmeeinrichtung angeordnetes, der Führung von oben eines zwischen dem Aussortierelement und der Mitnahmeeinrichtung förderbaren Produktes dienendes Führungselement vorhanden ist, wobei das mindestens eine Führungselement von dem Aussortierelement in vertikaler Richtung beabstandet, mit diesem verbunden und relativ zur Mitnahmeeinrichtung verschwenkbar ist.

2. Aussortiervorrichtung nach Anspruch 1, **dadurch gekennzeichnet, dass** die Zuführeinrichtung ein Zuführband (2) und die Abführeinrichtung ein Abführband (3), jeweils ausgestaltet als ein Endlosförderband, aufweisen.

3. Aussortiervorrichtung nach Anspruch 1 oder 2, **dadurch gekennzeichnet, dass** die Mitnahmeeinrichtung eine in vertikaler Richtung verstellbare Bandaufnahme (5, 105) mit einem Oberläufer-Fördergurt (6) umfasst, der eine Oberfläche mit einem hohen Reibungskoeffizient aufweist.

4. Aussortiervorrichtung nach Anspruch 3, **dadurch gekennzeichnet, dass** der Oberläufer-Fördergurt (6) als ein Flachband aus Kunststoff, insbesondere aus geschäumtem Kunststoff, ausgestaltet ist.

5. Aussortiervorrichtung nach einem der Ansprüche 2 bis 4, **dadurch gekennzeichnet, dass** sich der Oberläufer-Fördergurt (6) in Transportrichtung mindestens von der Zuführeinrichtung bis zur Abführeinrichtung hin erstreckt und dessen Umfangsgeschwindigkeit den Umfangsgeschwindigkeiten des Zuführbandes (2) und des Abführbandes (3) angepasst ist.

6. Aussortiervorrichtung nach einem der Ansprüche 1 bis 5, **dadurch gekennzeichnet, dass** das nach unten verschwenkbare Aussortierelement eine Aussortierklappe (7, 107) aufweist und insbesondere motorisch oder pneumatisch angesteuert wird.

7. Aussortiervorrichtung nach Anspruch 6, **dadurch gekennzeichnet, dass** die nach unten verschwenkbare Aussortierklappe (7, 107) einen in Transportrichtung sich verjüngenden Längsquerschnitt aufweist.

8. Aussortiervorrichtung nach einem der Ansprüche 1 bis 7, **dadurch gekennzeichnet, dass** das Aussortierelement eine aus einem Kunststoff mit niederem Reibungskoeffizienten bestehende Oberfläche aufweist, insbesondere dass ein als Aussortierklappe (7, 107) gestaltetes Aussortierelement gesamthaft aus einem solchen Kunststoff gefertigt ist.

9. Aussortiervorrichtung nach einem der Ansprüche 1 bis 8, **dadurch gekennzeichnet, dass** das Führungselement eine Führungsklappe (9) aufweist, wobei bevorzugt zwei beidseitig der Mitnahmeeinrichtung angeordnete Führungsklappen (9) vorhanden sind.

10. Aussortiervorrichtung nach Anspruch 9, **dadurch gekennzeichnet, dass** das Aussortierelement und die mindestens eine Führungsklappe (9) mittels einer Strebe (10) fest miteinander verbunden sind, wobei insbesondere der vertikale Abstand zwischen Aussortierelement und Führungsklappe (9) einstellbar ist.

11. Aussortiervorrichtung nach Anspruch 9, **dadurch gekennzeichnet, dass** das Aussortierelement und die mindestens eine Führungsklappe (9) gelenkig miteinander verbunden sind, wobei insbesondere der vertikale Abstand zwischen Aussortierelement und Führungsklappe (9) einstellbar ist.

12. Aussortiervorrichtung nach einem der Ansprüche 9 bis 11, **dadurch gekennzeichnet, dass** der vertikale Abstand zwischen Aussortierelement und Führungsklappe (9) sich über die Länge der Führungsklappe (9) betrachtet in Transportrichtung aufweitet.

13. Förderanlage mit einer Aussortiervorrichtung (1, 101) nach einem der Ansprüche 1 bis 12.

14. Förderanlage mit einer der Verifizierung vorgegebener Aussortierkriterien für ein Produkt dienenden Inspektionseinrichtung, insbesondere einer Waage, einer Einrichtung zur Bestimmung der Dimensionen des Produkts, einer Einrichtung zur Bestimmung der Dichtheit der Produktverpackung und/oder einer Einrichtung zur Inspektion hinsichtlich Fremdkörpern im Produkt, **dadurch gekennzeichnet, dass** eine Steuereinrichtung vorhanden ist, mittels welcher bei Erfüllung der vorgegebenen Aussortierkriterien die Aussortiereinrichtung (4) nach einem der Ansprüche 1 bis 12 betätigbar ist.

15. Förderanlage nach Anspruch 26, **dadurch gekennzeichnet, dass** die Aussortiervorrichtung (1, 101) auf einem vom Gestell der Inspektionseinrichtung separaten Gestell angeordnet ist.
